# EUROPÄISCHE PATENTSCHRIFT

(11) **EP 4 328 151 B1**
(45) Veröffentlichungstag und Bekanntmachung des Hinweises auf die Patenterteilung: **16.07.2025**
(21) Anmeldenummer: 23193421.7
(22) Anmeldetag: 25.08.2023
(51) Int. Cl.: B65G 1/02

(54) **ANFAHRSCHUTZ FÜR EIN LASTREGAL**
STARTING PROTECTION FOR A LOAD SHELF
PROTECTION DE DÉMARRAGE POUR UNE ÉTAGÈRE DE CHARGEMENT

(30) Priorität: 26.08.2022 DE 202022104828 U
(43) Veröffentlichungstag der Anmeldung: 28.02.2024
(73) Patentinhaber: Mertens, Sebastian, 99428 Grammetal (DE)
(72) Erfinder: Mertens, Sebastian, 99428 Grammetal (DE)
(74) Vertreter: TBK

(56) Entgegenhaltungen:
- DE-U1- 202014 007 795
- US-A- 5 636 755
- US-A1- 2017 280 875
- US-B2- 11 006 750

## Beschreibung

### Gebiet der Erfindung

Die vorliegende Erfindung bezieht sich auf einen Anfahrschutz für ein Lastregal.

### Stand der Technik

Lastregale sind für die Lagerung und Verwaltung von Lagergut vorgesehen. Das Lastregal besteht aus einem stabilen Regalrahmen mit vertikalen Trägern und horizontalen Trägern, je nach Ausgestaltung können zudem Böden vorgesehen sein oder die horizontalen Träger als Querträger ausgeführt sein. Die Abstände der vertikalen Träger und damit die Breite jedes Fachs sind in der Regel so gewählt, dass sie die Einlagerung von einem oder mehreren Lagergütern mit vorbestimmten Maximalabmessungen ermöglichen. Beispielsweise betragen die Maximalabmessungen einer Europalette bei Einlagerung in Längsrichtung 1.200 mm, bei Einlagerung in Querrichtung 800 mm. Bei einer Mehrplatzlagerung werden mehrere Lagergüter nebeneinander in einem Fach eingelagert. Die Höhe der einzelnen Fächer wird entsprechend der Höhe des Lagerguts sowie den Anforderungen des Lagers gewählt. Das Lagergut selbst kann auf einer Palette, auf vergleichbaren Ladungsträgern wie Gitterboxen, in einem Behälter oder lose ein- und ausgelagert werden.

Da Lastregale naturgemäß mehrere Ebenen bzw. Fächer aufweisen, kommen beim Ein- und Auslagern Flurförderzeuge zum Einsatz, um die oberen Fächer zu bestücken. Dabei erfolgt das Einlagern, indem das Lagergut horizontal positioniert wird, vertikal ausgerichtet wird und horizontal oder schräg in das Lastregal hineingefahren wird. Während des Einlagerns oder des Rangierens kann es zu einer Anfahrsituation kommen, in der das Lastregal oder ein Gegenstand, der sich in dem Fach befindet, von dem Lagergut oder dem Flurförderzeug angefahren wird bzw. damit kollidiert. Daher ist der bodennahe Teil der vertikalen Träger mit einem umlaufenden Anfahrschutz (Rammschutz) versehen, der Stöße abfängt und Beschädigungen des Rahmens mindert.

Eine wichtige gesetzliche oder versicherungstechnische Anforderung an Lagern und Lastregalen ist der Brandschutz, der für bestimmte Lastregale Feuerlöschanlagen vorgibt. Die am weitesten verbreitete Form der Feuerlöschanlage ist eine Sprinkleranlage, die mit einer Vielzahl von Sprinklern, die als Sprühkopf dienen, versehen ist und Wasser als Löschmittel einsetzt. Weitere Feuerlöschanlagen sind Feuerlöschsysteme mit verschiedenen Löschmittelarten, beispielsweise ein Impuls-Feuerlöschsystem, eine Sprühwasserlöschanlage, eine Wassernebellöschanlage, eine Schaumlöschanlage oder eine Pulverlöschanlage. Diese Feuerlöschsysteme weisen jeweils ein schirmförmiges Sprühbild vor, welches meist einer Rotationsfläche entspricht, die von dem Sprühkopf ausgeht, nach unten breiter wird und aufgrund der Schwerkraft nach unten steiler wird. Um sicherzustellen, dass das von dem Sprühkopf freigesetzte Löschmittel nicht behindert wird (keine Sprühbehinderung auftritt), sind horizontale und vertikale Abstände bzw. Freigänge von dem Sprühkopf vorgegeben, innerhalb welcher keine Hindernisse hineinragen dürfen. Beispielsweise sind solche Abstände in Kapitel 2.5.4.5 der frei zugänglichen *FM Global Property Loss Prevention Data Sheet: 2-0 Installation Guidelines for Automatic Sprinklers* (Stand Oktober 2021) vorgeschlagen.

Die Sprühköpfe der Feuerlöschanlage sind üblicherweise an einer Decke oder, besonders bei hohen Lastregalen, innerhalb der Fächer montiert. Im letzteren Fall ragt der Sprühkopf in das Fach hinein, damit das Sprühbild unterhalb der horizontalen Träger verlaufen kann, sodass eine Sprühbehinderung vermieden wird. Der Sprühkopf ist jedoch empfindlich gegen Stöße, und selbst kleine Beschädigungen des Sprühkopfs oder der sonstigen in dem Fach verlaufenden Komponenten der Feuerlöschanlage können die Betriebssicherheit sowie die Verfügbarkeit bzw. Betriebsfreigabe des Lastregals gefährden. Daher stellt der in das Fach hineinragende, ungeschützte Sprühkopf ein großes Risiko dar.

Andererseits ist der Rahmen des Lastregals deutlich stabiler als der Sprühkopf, und Kratzer und kleinere Beschädigungen erfordern nicht immer eine Außerbetriebnahme, sodass sie die Betriebssicherheit und Verfügbarkeit des Regals nicht einschränken. Daher kann die Feuerlöschanlage beispielsweise höher als ein vor ihr liegender horizontaler Träger verbaut sein, was allerdings eine Sprühbehinderung zur Folge haben kann. Da der Sprühkopf selbst eine gewisse Höhe hat, nehmen dadurch zudem die Höhe des horizontalen Trägers und somit der Materialaufwand zu, obwohl kein strukturmechanischer Anlass dazu vorliegt, was vermeidbare Kosten zur Folge hat. DE 20 2014 007795 U1 offenbart einen Anfahrschutz für ein Lastregal nach dem Oberbegriff des Anspruchs 1.

### Aufgabe der Erfindung

In Anbetracht des Vorstehenden ist eine Aufgabe der vorliegenden Erfindung, einen Anfahrschutz für ein Lastregal vorzusehen, der eine Feuerlöschanlage kostengünstig gegen ein Anfahren schützen kann, ohne ihre Funktion zu beeinträchtigen.

### Zusammenfassung der Erfindung

Die Aufgabe wird durch einen Anfahrschutz mit den Merkmalen des

Patentanspruchs 1 gelöst. Vorteilhafte Weiterbildungen sind in den abhängigen Patentansprüchen dargelegt.

Der erfindungsgemäße Anfahrschutz für ein Lastregal hat einen länglichen Hauptkörper und je einen Befestigungsabschnitt an beiden Enden des Hauptkörpers in seiner Längsrichtung. Der Befestigungsabschnitt ist angepasst, an einen Rahmen des Lastregals so befestigt zu werden, dass eine Innenfläche des Befestigungsabschnitts den Rahmen berührt. Damit kann der Anfahrschutz an das Lastregal befestigt werden und durch die Innenfläche des Befestigungsabschnitts eine etwaige Anfahrlast, die in der Anfahrsituation auf den Anfahrschutz wirkt, aufnehmen und über eine große Fläche in den Rahmen einleiten. Dadurch werden Schäden an der Feuerlöschanlage oder anderen in der Anfahrzone liegenden Gegenständen zuverlässig vermieden. Zudem kann im Schadensfall lediglich der kostengünstige Anfahrschutz ausgetauscht werden.

Darüber hinaus ist dadurch ein Nachrüsten des Anfahrschutzes auf bestehenden Lastregalen möglich.

Der Hauptkörper weist einen dünnwandigen Querschnitt mit einem Kontaktabschnitt, einem ersten Schenkel und einem zweiten Schenkel auf. Als ein dünnwandiger Querschnitt ist jeder Querschnitt zu verstehen, in welchem eine nahezu konstante Wanddicke vorliegt und beispielsweise Biegungen den Querschnitt formen. Der Kontaktabschnitt hat eine vorbestimmte Fläche, die parallel zu der Innenfläche des Befestigungsabschnitts ausgerichtet ist, und eine als Kontaktfläche definierte Fläche, die der vorbestimmten Fläche entgegengesetzt ist. Die vorbestimmte Fläche definiert somit eine Innenseite des Kontaktabschnitts bzw. des Hauptkörpers, die dem Lastregal zugewandt ist. Die Kontaktfläche ist demzufolge eine Außenfläche auf einer Außenseite und wird im Falle eines Anfahrens mit einem Flurförderzeug, beispielsweise mit einem Gabelstapler, von diesem kontaktiert, um die Anfahrlast aufzunehmen. Damit wird eine geeignete, zweckbestimmte Fläche bereitgestellt, die anstelle des Lastregals und der Feuerlöschanlage die Anfahrlast aufnehmen kann, um Beschädigungen an dem Lastregal zu vermeiden.

Zudem weist der Kontaktabschnitt eine erste Längskante und eine zweite Längskante auf, die zwischen den Befestigungsabschnitten verlaufen. Der erste Schenkel ist an der ersten Längskante des Kontaktabschnitts angewinkelt, und der zweite Schenkel ist an der zweiten Längskante des Kontaktabschnitts angewinkelt. In dem montierten Zustand liegt der erste Schenkel oben und der zweite Schenkel unten. Durch die zwei Schenkel werden die Steifigkeit und die Festigkeit des Kontaktabschnitts in der zu erwartenden Anfahrrichtung, d.h. normal auf die Kontaktfläche, deutlich erhöht.

Ein erster Winkel zwischen dem Kontaktabschnitt und dem ersten Schenkel beträgt 90°. Ein zweiter Winkel zwischen dem Kontaktabschnitt und dem zweiten Schenkel beträgt weniger als 90°. Durch den senkrechten ersten Schenkel wird eine maximale Steifigkeit in der Anfahrrichtung erzielt, da damit ein dünnwandiger und zu der Lastrichtung senkrechtliegender Abschnitt als Versteifung bereitgestellt wird. Durch den spitzwinkligen zweiten Schenkel wird ebenfalls eine Versteifung bereitgestellt, die nicht senkrecht, sondern mit einem spitzen Winkel (<90°) auf der Innenseite des Anfahrschutzes vorgesehen ist. Somit wird die Steifigkeit ebenfalls in erheblichem Maße erhöht.

Der erste Schenkel und der zweite Schenkel stehen naturgemäß in der Querschnittsansicht in einer Vorstehrichtung vor, die senkrecht zu der vorbestimmten Fläche ist. Durch den senkrechten ersten Winkel steht der erste Schenkel mit seiner gesamten Länge vor, d.h. eine Vorstehbreite in der Vorstehrichtung entspricht der Länge des ersten Schenkels. Da jedoch der zweite Winkel spitz ist, steht der zweite Schenkel nicht mit seiner gesamten Länge, sondern um einen kleineren Betrag vor, weil die Länge auf die Vorstehrichtung projiziert wird. Genauer gesagt entspricht die Vorstehbreite des zweiten Schenkels der Länge des zweiten Schenkels multipliziert mit dem Kosinus des zweiten Winkels. Da der zweite Winkel weniger als 90° beträgt und cos(<90°) < 1 ist, ist die Vorstehbreite des zweiten Schenkels gegenüber einem Winkel von 90° reduziert. Somit wird ein Platzbedarf des zweiten Schenkels bei gleichbleibender Breite des zweiten Schenkels reduziert, womit ein Nutzvolumen des Lastregals erhöht wird. Da die erste Längskante des Anfahrschutzes dem Sprühkopf oder einem andersartigen Ausgangspunkt des Sprühbilds näherliegt als die zweite Längskante, wird durch den vorgenannten reduzierten Platzbedarf des zweiten Schenkels zudem die Schutzwirkung verbessert und eine Behinderung des Sprühbilds der Feuerlöschanlage vermieden, ohne die Versteifungswirkung in erheblichem Maße zu beeinträchtigen.

Vorzugsweise ist der Anfahrschutz mit mindestens einem Durchgangsloch in der Nähe der zweiten Längskante versehen. Durch den spitzen zweiten Winkel entsteht zwischen dem untenliegenden zweiten Schenkel und dem Kontaktabschnitt ein Volumen, welches im Brandfall Löschmittel auffangen kann. Durch das Durchgangsloch kann das Löschmittel aus diesem Volumen abfließen. Damit wird der Anfahrschutz vor negativen Auswirkungen des Löschmittels, beispielsweise Rostbildung oder ätzender Wirkung, geschützt. Ferner wird das Löschmittel umgehend dem Brand zugeführt, wodurch die Feuerlöscheffizienz gesteigert wird.

Vorzugsweise weist der Befestigungsabschnitt ein Loch zur Befestigung an das Lastregal auf. Dadurch können einfache und kostengünstige Befestigungsmittel verwendet werden, beispielsweise Schrauben (reibschlüssige Befestigung) oder Niete (formschlüssige Befestigung). Besonders vorteilhaft ist ein lösbares Befestigungsmittel wie eine Verschraubung, womit der Anfahrschutz leicht ausgetauscht werden kann.

Vorzugsweise ist das Loch des Befestigungsabschnitts ein Langloch. Damit kann der Anfahrschutz an verschiedene Einbausituationen angepasst werden, zudem können Gleichteile des Anfahrschutzes für verschiedene Lastregale verwendet werden. Beispielsweise kann die Länge des Langlochs 60mm betragen, um eine Anpassung in diesem Längenbereich vornehmen zu können, zum Beispiel, wenn sich Vorgaben zur Einbauhöhe der Feuerschutzanlage ändern.

Vorzugsweise weist der Befestigungsabschnitt ein Montagebauteil auf, das konfiguriert ist, zusammen mit dem Lastregal eine lösbare formschlüssige Verbindung zu bilden. Ein Beispiel für ein formschlüssiges Montagebauteil ist eine Schwalbenschwanzverbindung, die durch bloßes Einhängen eine einfache Montage ohne weitere Bauteile ermöglicht. Das Montagebauteil kann einstückig mit dem Anfahrschutz oder separat ausgebildet sein und das vorstehend beschriebene Loch ersetzen oder ergänzen. Falls sowohl das Loch als auch das Montagebauteil vorgesehen sind, kann über das Loch eine zusätzliche Verbindung hergestellt werden, die die lösbare Verbindung mittels des Montagebauteils verstärkt und/oder ihr versehentliches Lösen verhindert.

Vorzugsweise ist/sind der erste Schenkel und/oder der zweite Schenkel nicht auf der gesamten Länge der dazugehörigen Längskante des Kontaktabschnitts vorgesehen. Da die Länge des jeweiligen Schenkels zwischen den ihn umgebenden Rahmenteilen durch diese begrenzt ist, kann durch die vorgenannte Maßnahme ein Freigang für vertikale Rahmenteile des Lastregals freigelassen werden. Dies erhöht die Montageflexibilität und ermöglicht es, Toleranzen des Rahmens zu berücksichtigen, ohne den Anfahrschutz anpassen zu müssen.

Vorzugsweise weist der Befestigungsabschnitt eine versetzte Kante auf, die parallel zu der nächstliegenden Längskante des Kontaktabschnitts verläuft und zu dieser versetzt ist. Mit anderen Worten befinden sich der Befestigungsabschnitt und der Kontaktabschnitt auf der Seite der ersten Längskante oder der zweiten Längskante nicht auf gleicher Höhe. Dies entspricht einer Aussparung in der Nähe der entsprechenden Längskante und des Befestigungsabschnitts. Durch diese Aussparung kann ein zusätzlicher Freigang für verschiedene Montagesituationen freigelassen werden, zum Beispiel, wenn Aushebesicherungen, Rahmenverbindungen, Schutzvorrichtungen oder dergleichen an dem vertikalen Rahmenteil anzubringen sind. Damit wird die Montageflexibilität erhöht.

Alternativ oder zusätzlich weist der Befestigungsabschnitt eine bündige Kante auf, die bündig mit der nächstliegenden Längskante des Kontaktabschnitts verläuft und diese fortsetzt. Mit anderen Worten befinden sich der Befestigungsabschnitt und der Kontaktabschnitt auf der Seite der ersten Längskante oder der zweiten Längskante auf gleicher Höhe. Dadurch kann die Herstellung vereinfacht werden.

Vorzugsweise ist der Anfahrschutz durch Zuschneiden und Biegen eines Blechs hergestellt. Dieses Herstellungsverfahren ist für den erfindungsgemäßen Querschnitt besonders vorteilhaft und kostengünstig. Das Zuschneiden kann beispielsweise durch Stanzen oder durch einen Laserzuschnitt erfolgen. Durch Stanzen lassen sich besonders hohe Stückzahlen kostengünstig herstellen. Durch einen Laserzuschnitt können Änderungen an verschiedene Montagesituationen leicht vorgenommen werden, da jeder Anfahrschutz passend zugeschnitten werden kann. Dies erhöht die Montageflexibilität.

Vorzugsweise ist das Blech ein Stahlblech. Stahl ist ein kostengünstiger und hochfester Werkstoff, der für den Anfahrschutz besonders vorteilhaft ist. Eine besonders geeignete Gestaltung sieht einen Baustahl mit einer Dicke von 1,5mm bis 2,5mm vor; dieser Dickenbereich ermöglicht eine hohe Steifigkeit und Festigkeit bei gleichzeitig niedrigen Kosten. Zudem kann ein verzinkter oder lackierter Stahl oder ein Edelstahl eingesetzt werden, um den Anfahrschutz robuster zu gestalten und vor Rost und weiteren Umgebungseinwirkungen zu schützen.

Vorzugsweise hat der Anfahrschutz ein Dämpferbauteil, das auf der Kontaktfläche des Kontaktabschnitts vorgesehen ist. Das Dämpferbauteil dient dazu, leichte Stöße durch elastische oder plastische Verformung des Dämpferbauteils zu absorbieren, ohne den Hauptkörper des Anfahrschutzes zu verformen. Dadurch wird ein zusätzlicher Schutz erzielt. Falls das Dämpferbauteil darüber hinaus lösbar angebracht ist, beispielsweise durch Verschrauben, wiederlösbares Kleben oder einen Klettverschluss, ist das Dämpferbauteil zudem ersetzbar, was die Einsatzdauer des Anfahrschutzes zusätzlich verlängert.

Als eine Möglichkeit ist das Dämpferbauteil aus Schaumstoff hergestellt. Da Schaumstoffe einen hohen Luftanteil aufweisen, ermöglicht ein derartiges Dämpferbauteil einen besonders hohen Schutz bei geringem Gewicht.

Alternativ ist das Dämpferbauteil ein Gummiüberzug. Dadurch kann der Anfahrschutz einteilig und kostengünstig ausgeführt werden.

Alternativ ist das Dämpferbauteil aus Holz hergestellt. Holz ist kostengünstig und leicht an die Montagesituation anpassbar, dabei sind die Stoßdämpfungseigenschaften von Holz hervorragend.

Vorzugsweise liegt die Länge des Kontaktabschnitts zwischen 1000mm und 4000mm. Dieser Längenbereich ist besonders dazu geeignet, herkömmliche Lastregale mit einem einteiligen Anfahrschutz zwischen jedem Trägerpaar zu versehen.

Vorzugsweise liegt die Länge des Kontaktabschnitts zwischen 1700mm und 2100mm, insbesondere bei 1900mm. Lastregale für Mehrplatzlagerung von zwei Paletten haben herkömmlicherweise eine nominelle Breite von ca. 1900mm, beeinflusst von den Herstellungstoleranzen sowie den zweckmäßigen Freigängen zwischen den Paletten sowie zwischen Palette und vertikalem Rahmenteil. Dadurch kann die tatsächliche Breite um etwa ±200mm abweichen.

Alternativ liegt die Länge des Kontaktabschnitts zwischen 2400mm und 3000mm, insbesondere bei 2700mm. Lastregale für drei Paletten haben herkömmlicherweise eine nominelle Breite von ca. 2700mm, die tatsächliche Breite kann um etwa ±300mm abweichen.

Alternativ liegt die Länge des Kontaktabschnitts zwischen 3200mm und 4000mm, insbesondere bei 3600mm. Lastregale für vier Paletten haben herkömmlicherweise eine nominelle Breite von ca. 3600mm, die tatsächliche Breite kann um etwa ±400mm abweichen.

Die Erfindung sieht ferner ein Lastregal vor, welches mit dem vorstehend dargelegten Anfahrschutz sowie einer Sprinkleranlage und/oder einem Feuerlöschsystem versehen ist. Besonders geeignet ist der erfindungsgemäße Anfahrschutz für ein Lastregal, das ein Palettenregal, ein Kragarmregal, ein Fachbodenregal oder ein Weitspannregal ist.

### Kurzbeschreibung der Zeichnungen

Fig. 1 ist eine perspektivische Ansicht, die einen Anfahrschutz gemäß einem ersten Ausführungsbeispiel zeigt.
Fig. 2 ist eine Vorderansicht des Anfahrschutzes von Fig. 1, betrachtet von einer Innenseite.
Fig. 3 ist eine Ansicht des Anfahrschutzes von Fig. 1, betrachtet von unten.
Fig. 4 ist eine Seitenansicht des Anfahrschutzes von Fig. 1, betrachtet in einer Normalenrichtung einer Querschnittsebene.
Fig. 5 ist eine Seitenansicht eines Anfahrschutzes gemäß einer Modifikation des ersten Ausführungsbeispiels, betrachtet in einer Normalenrichtung einer Querschnittsebene.
Fig. 6 ist eine perspektivische Ansicht des Anfahrschutzes von Fig. 5.
Fig. 7 ist eine gebrochene Rückansicht des Anfahrschutzes von Fig. 5, betrachtet von einer Außenseite.
Fig. 8 ist eine Seitenansicht eines Lastregals, das mit dem erfindungsgemäßen Anfahrschutz und einer Sprinkleranlage versehen ist.

### Beschreibung der Ausführungsbeispiele

### Lastregal

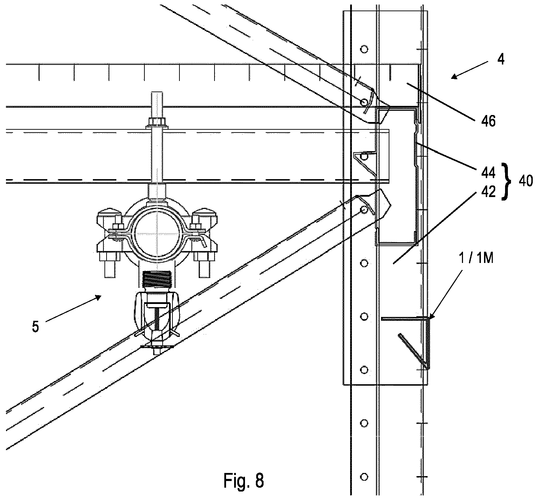

Ein Beispiel für einen erfindungsgemäßen Anfahrschutz ist in Fig. 8 dargestellt, die ein Lastregal 4, eine Sprinkleranlage 5 als die Feuerlöschanlage, und einen exemplarischen Anfahrschutz 1 / 1M in einer Seitenansicht zeigt. Dabei ist ein später beschriebener Befestigungsabschnitt ausgeblendet.

Das Lastregal 4 hat einen Rahmen 40 mit vertikalen Trägern 42 und horizontalen Trägern 44, die horizontal zwischen den vertikalen Trägern 42 verlaufen und diese verbinden. Ein Boden 46 ist auf den horizontalen Trägern 44 abgelegt, sodass er durch diese gestützt wird und ein Lagergut aufnehmen kann; demgemäß ist das Lastregal 4 ein Fachbodenregal. Alternativ können Paletten anstelle des Bodens 46 auf die horizontalen Träger 44 abgelegt werden, um ein Palettenregal bereitzustellen. Als weitere Alternative können die horizontalen Träger nicht vertikale Träger 42 verbinden, sondern senkrecht von einer Mittelstütze aus hervorragen, um ein Kragarmregal bereitzustellen.

### Erstes Ausführungsbeispiel

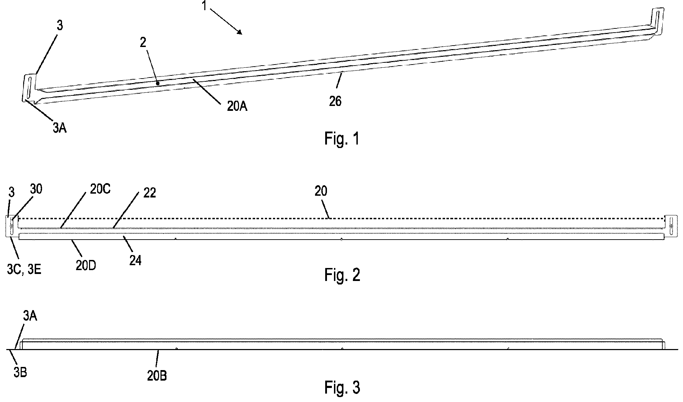

Fig. 1 bis 4 zeigen einen Anfahrschutz 1 gemäß einem ersten Ausführungsbeispiel. Der Anfahrschutz 1 ist ein längliches Bauteil, das an das (nicht dargestellte) Lastregal 4 anzubringen ist. Genauer gesagt wird der Anfahrschutz 1 bei Fachboden-, Paletten- und Weitspannregalen so montiert, dass er zwei vertikale Träger 42 des Lastregal miteinander verbindet und dabei parallel unterhalb dem horizontalen Träger 44 verläuft. Beim Kragarmregal hingegen verbindet der Anfahrschutz 1 zwei horizontale Träger auf der Seite, von der aus das Lagergut in das Regal eingelagert wird.

Der Anfahrschutz 1 wird auf eine Höhe montiert, die bewirkt, dass eine unterste Kante eines später beschriebenen Kontaktabschnitts 20 des Anfahrschutzes 1 niedriger als eine unterste Kante einer an dem Lastregal vorgesehene Feuerlöschanlage liegt (siehe Fig. 8, wo die Sprinkleranlage 5 als die Feuerlöschanlage gezeigt ist). Dadurch schützt der Anfahrschutz 1 die Feuerlöschanlage vor einem versehentlichen Anfahren, beispielsweise mit einem Lagergut, das mithilfe eines Gabelstaplers in das Lastregal eingefahren wird.

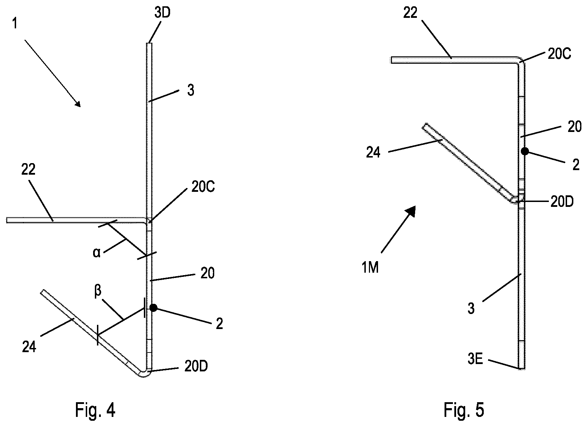

Der Anfahrschutz 1 hat einen länglichen Hauptkörper 2 und zwei an den Enden des Hauptkörpers 2 vorgesehene Befestigungsabschnitte 3. Der Hauptkörper 2 hat einen dünnwandigen Querschnitt, der in Fig. 4 dargestellt ist und später beschrieben wird. Bei dem ersten Ausführungsbeispiel ist der Anfahrschutz 1 ein Blechbiegeteil aus Stahl, das durch Zuschneiden und Biegen eines Blechs mit einer Dicke von 1,5mm hergestellt ist.

Die Befestigungsabschnitte 3 sind an beiden Enden des Hauptkörpers 2 in seiner Längsrichtung als Fortführung des Hauptkörpers 2 vorgesehen, sodass ihre Innenflächen 3A (dem Lastregal zugewandte Flächen) und Außenflächen 3B (von dem Lastregal weg zeigende Flächen) jeweils bündig mit Innenflächen und Außenflächen des Hauptkörpers 2 sind, wie in Fig. 1 und 3 leicht erkennbar ist. Wenn der Anfahrschutz 1 an dem Lastregal 4 montiert ist, liegen die Innenflächen 3A an den zur Montage vorgesehenen Teilen des Rahmens 40 (vertikalen Trägern 42 oder horizontalen Trägern) an. Die Befestigung an das Lastregal 4 erfolgt bei dem Ausführungsbeispiel mittels einer Verschraubung durch ein an jedem Befestigungsabschnitt 3 vorgesehenes Loch 30, das als Langloch ausgebildet ist. Alternativ oder zusätzlich kann die Befestigung über eine lösbare formschlüssige Verbindung wie eine Schwalbenschwanzverbindung erfolgen.

Der Hauptkörper 2 hat einen in Fig. 4 gezeigten Querschnitt. Der Hauptkörper 2 hat einen Kontaktabschnitt 20, der parallel zu den Befestigungsabschnitten 3 verläuft und zwischen diesen liegt (Fig. 2 und 4). Der Kontaktabschnitt 20 ist der Teil des Hauptkörpers 2, der eine Innenfläche als eine vorbestimmte Fläche 20A, die dem Lastregal 4 zugewandt ist, sowie eine Außenfläche als eine Kontaktfläche 20B hat, die von dem Regal weg zeigt und in einer Anfahrsituation als erste angefahren bzw. kontaktiert wird. Somit dient die Kontaktfläche 20B der Lastaufnahme, und die Anfahrlast wird über die Kontaktfläche 20B, den Hauptkörper 2 und die Befestigungsabschnitte 3 in den Rahmen 40 des Lastregals 4 eingeleitet.

Der Hauptkörper 2 hat ferner einen ersten Schenkel 22 und einen zweiten Schenkel 24, die zur Versteifung des Kontaktabschnitts 20 dienen (Fig. 4). Der erste Schenkel 22 ist an einer ersten Längskante 20C (obere Kante) angewinkelt, der zweite Schenkel 24 ist an einer zweiten Längskante 20D (untere Kante) angewinkelt. Bei dem ersten Ausführungsbeispiel sind die Schenkel 22, 24 in der Ansicht von Fig. 4 gleich lang. Wie in Fig. 2 sichtbar ist, sind die Schenkel 22, 24 kürzer als die jeweils dazugehörige Längskante 20C, 20D des Kontaktabschnitts 20.

Ein in Fig. 4 gekennzeichneter erster Winkel α, der ein Winkel zwischen dem ersten Schenkel 22 und dem Kontaktabschnitt 20 ist, beträgt 90°, sodass der erste Schenkel 22 in der Ansicht von Fig. 4 um seine gesamte Länge von dem Kontaktabschnitt 20 vorsteht. Somit steht die gesamte Länge des ersten Schenkels 22 als zur Anfahrlast senkrechte Versteifung zur Verfügung. Demzufolge verbessert der erste Schenkel 22 die Steifigkeit des Kontaktabschnitts 20.

Ein in Fig. 4 gekennzeichneter zweiter Winkel β, der ein Winkel zwischen dem zweiten Schenkel 24 und dem Kontaktabschnitt 20 ist, beträgt weniger als 90°, sodass der zweite Schenkel 24 in der Ansicht von Fig. 4 nicht um seine gesamte Länge von dem Kontaktabschnitt 20 vorsteht. Genauer gesagt ist bei dem ersten Ausführungsbeispiel der zweite Schenkel 24 mit einem zweiten Winkel β von etwa 50° vorgesehen. Wie in Fig. 4 gut erkennbar ist, ist die Vorstehbreite des zweiten Schenkels 24 damit kürzer als die Vorstehbreite des ersten Schenkels 22. Dennoch weist der zweite Schenkel 24 die gleiche Länge wie der erste Schenkel 22 auf, sodass die Versteifungswirkung höher ist im Vergleich mit einem Fall, in dem der zweite Schenkel mit 90° angewinkelt ist und eine kürzere Länge hat, die der Vorstehbreite entspricht. Demzufolge verbessert der zweite Schenkel 24 die Steifigkeit des Kontaktabschnitts 20.

Der zweite Winkel β ist vorliegend derart gewählt, dass der zweite Schenkel 24 in etwa dem Verlauf des Sprühbilds folgt. Somit wird durch den zweiten Winkel β, der weniger als 90° beträgt, ein größerer Freigang für das Sprühbild ermöglicht. Genauer gesagt kann der Anfahrschutz 1 entweder horizontal näher an dem Sprühkopf angeordnet werden als ein Vergleichsanfahrschutz, bei dem der zweite Winkel β 90° beträgt, oder weiter unten angeordnet werden als der Vergleichsanfahrschutz. Selbst wenn der zweite Winkel β nicht dem Verlauf des Sprühbilds folgt, kann diese Wirkung erhalten werden, solange der zweite Winkel β weniger als 90° beträgt. Dadurch kann der Anfahrschutz 1 in jedem Fall eine Behinderung des Sprühbilds vermeiden.

Obwohl der zweite Schenkel 24 das Sprühbild nicht behindert, können sich Teile des Löschmittels der Sprinkleranlage 5 in einem Volumen sammeln, das zwischen dem zweiten Schenkel 24 und dem Kontaktabschnitt 20 verbleibt. Der Grund dafür ist, dass das Löschmittel beispielsweise von dem in dem Lastregal 4 gelagerten Lagergut abprallen kann und sich zu dem Volumen zerstreuen kann. Damit sich das Löschmittel nicht in dem Volumen sammelt, ist mindestens ein Durchgangsloch vorgesehen. Aufgrund der Schwerkraft ist das Durchgangsloch am wirksamsten, wenn es an dem untersten Punkt des Hauptkörpers 2 vorgesehen ist, sodass das Löschmittel aus dem Volumen abfließen kann. Da die zweite Längskante 20D unten angeordnet ist und den untersten Punkt des Hauptkörpers 2 bildet, ist somit das Durchgangsloch unmittelbar an der zweiten Längskante 20D vorgesehen. Bei dem ersten Ausführungsbeispiel sind drei Durchgangslöcher 26 vorgesehen, ihre Anzahl und ihre Lage können jedoch beliebig den Gegebenheiten angepasst werden. Beispielsweise kann es zweckdienlich sein, das Durchgangsloch bzw. die Durchgangslöcher nicht unmittelbar an der zweiten Längskante 20D vorzusehen, sondern in dem geraden Teil des zweiten Schenkels 24, um eine Kerbwirkung an der zweiten Längskante 20D zu vermeiden.

Der Anfahrschutz 1 des ersten Ausführungsbeispiels erzielt die in der Zusammenfassung der Erfindung dargelegten Wirkungen und Vorteile.

### Modifikation des ersten Ausführungsbeispiels

Fig. 5 bis 7 zeigen einen Anfahrschutz 1M gemäß einer Modifikation des ersten Ausführungsbeispiels. Die Modifikation hat die gleichen Bestandteile wie das erste Ausführungsbeispiel, genauer gesagt den Hauptkörper 2, die zwei Befestigungsabschnitte 3, den Kontaktabschnitt 20, die Schenkel 22, 24, die Winkel α, β und die drei Durchgangslöcher 26. Daher wird im Folgenden auf wiederholte Beschreibungen dieser Bestandteile verzichtet und lediglich der Unterschied erläutert.

Der Anfahrschutz 1M der Modifikation und der Anfahrschutz 1 des ersten Ausführungsbeispiels unterscheiden sich hinsichtlich der Anordnung des Befestigungsabschnitts 3 mit Bezug auf den Hauptkörper 2. Fig. 5 ist eine Ansicht der Modifikation, die der Ansicht des ersten Ausführungsbeispiels in Fig. 4 entspricht. Wie aus dem Vergleich der Figuren erkennbar wird, ragt bei dem ersten Ausführungsbeispiel der Befestigungsabschnitt 3 über den Hauptkörper 2 hinaus nach oben hervor (Fig. 4), während der Befestigungsabschnitt 3 bei der Modifikation über den Hauptkörper 2 hinaus nach unten hervorragt (Fig. 5). Genauer gesagt liegt eine oberste Kante 3D des Befestigungsabschnitts 3 bei dem Anfahrschutz 1 des ersten Ausführungsbeispiels oberhalb der ersten Längskante 20C (sodass die erste Längskante 20C zwischen der obersten Kante 3D und der zweiten Längskante 20D liegt), während eine unterste Kante 3E des Befestigungsabschnitts 3 bei dem Anfahrschutz 1M der Modifikation unterhalb der zweiten Längskante 20D liegt. In beiden Fällen ist die erste Längskante 20C oben und die zweite Längskante 20D unten angeordnet, und sowohl der Anfahrschutz 1 als auch der Anfahrschutz 1M haben ihre jeweilige unterste Kante des Kontaktabschnitts 20 unterhalb der Sprinkleranlage 5, um diese wie vorstehend beschrieben zu schützen.

### Weitere Merkmale des ersten Ausführungsbeispiels und der Modifikation

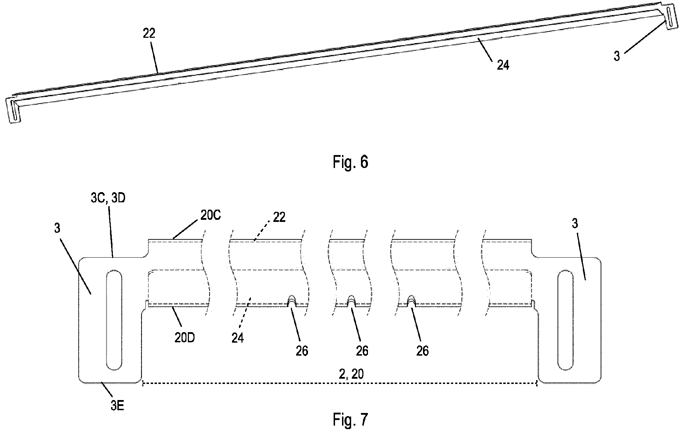

Im Folgenden werden insbesondere anhand Fig. 7 weitere Merkmale beschrieben, die dem ersten Ausführungsbeispiel und der Modifikation gemeinsam sind. In Fig. 7 ist beispielhaft der Anfahrschutz 1M gemäß der Modifikation dargestellt. Dabei ist der Anfahrschutz 1M gebrochen dargestellt, um zu verdeutlichen, dass seine Länge geändert werden kann, ohne den grundsätzlichen Aufbau und die Befestigungsabschnitte 3 zu verändern.

Genauer gesagt kann der Anfahrschutz 1, 1M in verschiedenen Längen hergestellt werden. Die Befestigungsabschnitte 3 werden an die Gegebenheiten des Rahmens 40 angepasst und bilden Endteile des Anfahrschutzes 1, 1M. Der mittlere Teil zwischen den Befestigungsabschnitten 3 entspricht dabei dem Hauptkörper 2 bzw. dem Kontaktabschnitt 20. Die Länge dieses mittleren Teils ist in Fig. 7 zwischen den Befestigungsabschnitten 3 eingezeichnet.

Die Länge des Kontaktabschnitts 20 liegt zwischen 1000mm und 4000mm. Dieser Längenbereich ist besonders dazu geeignet, herkömmliche Lastregale mit einem einteiligen Anfahrschutz zwischen jedem Paar vertikaler Rahmenteile zu versehen. Lastregale für Mehrplatzlagerung von zwei Paletten haben herkömmlicherweise eine nominelle Breite von ca. 1900mm, abhängig von den Herstellungstoleranzen sowie den zweckmäßigen Freigängen zwischen den Paletten sowie zwischen Palette und vertikalem Rahmenteil. Dadurch kann die tatsächliche Breite um etwa ±200mm abweichen, sodass die Länge des Kontaktabschnitts 20 bei 1900±200mm liegt. Gleichermaßen ist für Lastregale für drei Paletten eine Länge des Kontaktabschnitts 20 von 2700mm±300mm und für Lastregale für vier Paletten eine Länge des Kontaktabschnitts 20 von 3600mm±400mm geeignet. Lastregale, die keine Palettenregale, sondern Kragarmregale, Fachbodenregale oder Weitspannregale sind, erfordern ebenfalls einen Anfahrschutz in den vorgenannten Längenbereichen, sodass der Anfahrschutz 1, 1M auch für diese Einsatzfälle geeignet ist.

Wie in Fig. 7 sichtbar ist, ist bei der Modifikation die oberste Kante 3D des Befestigungsabschnitts 3 als eine versetzte Kante 3C ausgebildet, die versetzt zu der ersten Längskante 20C ist, wobei die erste Längskante 20C die nächstliegende Längskante der versetzten Kante 3C ist. Wie in Fig. 2 sichtbar ist, ist bei dem ersten Ausführungsbeispiel gleichermaßen die unterste Kante 3E als die versetzte Kante 3C ausgebildet, und die versetzte Kante 3C ist zu der zweiten Längskante 20D als nächstliegende Längskante versetzt. Dadurch befinden sich der Befestigungsabschnitt und der Kontaktabschnitt auf der Seite der ersten Längskante 20C (Modifikation) oder der zweiten Längskante 20D (erstes Ausführungsbeispiel) nicht auf gleicher Höhe, wodurch eine Aussparung in der Nähe der entsprechenden Längskante 20C, 20D und des Befestigungsabschnitts 3 ausgebildet wird.

Bei dem Anfahrschutz 1, 1M sind zudem Ausrundungen zwischen der ersten Längskante 20C und der versetzten Kante 3D ausgebildet. Dadurch wird die vorgenannte Aussparung vergrößert bzw. die zweite Längskante 20C verkürzt, sodass sie nicht auf der gesamten Länge des Hauptkörpers 20 ausgebildet ist. Falls die Ausrundung nicht vorgesehen ist und die Längskante nicht verkürzt ist, ist jede Längskante als die gesamte (Länge der) Kante zwischen den Befestigungsabschnitten 3 definiert.

### Weitere Modifikationen

Der Anfahrschutz 1, 1M gemäß dem ersten Ausführungsbeispiel und der Modifikation weist die versetzte Kante 3C auf. Jedoch kann an ihrer Stelle eine (nicht dargestellte) bündige Kante ausgebildet sein, die bündig mit der nächstliegenden Längskante 20C, 20D des Kontaktabschnitts 20 verläuft und diese fortsetzt. Dadurch ist die Aussparung nicht vorgesehen, und die Herstellung kann vereinfacht werden.

Das erste Ausführungsbeispiel und die Modifikation können kombiniert werden, sodass die oberste Kante 3D oberhalb der ersten Längskante 20C sowie die unterste Kante 3E unterhalb der zweiten Längskante 20D liegen. Mit anderen Worten kann der Befestigungsabschnitt 3 sowohl nach oben als auch nach unten über den Hauptkörper 2 hinaus vorragen. Dadurch ist der Befestigungsabschnitt im Verhältnis zu dem Kontaktabschnitt vergrößert, was eine größere Montageflexibilität gewährleistet und die Lasteinleitung verbessert.

Bei dem ersten Ausführungsbeispiel ist die Kontaktfläche 20B bündig mit der Außenfläche 3B des Befestigungsabschnitts 3, jedoch kann die Kontaktfläche 20B auch parallel versetzt zu der Außenfläche 3B sein, sodass der Befestigungsabschnitt 3 und der Kontaktabschnitt 20 in der Anfahrrichtung zueinander parallel versetzt sind, um den Platzbedarf zu optimieren.

Um die Schutzwirkung weiter zu verbessern, kann der Anfahrschutz ferner ein Dämpferbauteil (nicht dargestellt) haben, das auf der Kontaktfläche 20B des Kontaktabschnitts 20 vorgesehen ist. Das Dämpferbauteil dient dazu, leichte Stöße durch elastische oder plastische Verformung zu absorbieren, ohne den Hauptkörper 2 des Anfahrschutzes zu verformen. Dadurch wird ein zusätzlicher Schutz erzielt. Falls das Dämpferbauteil darüber hinaus lösbar angebracht ist, beispielsweise durch Verschrauben, wiederlösbares Kleben oder einen Klettverschluss, ist das Dämpferbauteil zudem ersetzbar, was die Einsatzdauer des Anfahrschutzes zusätzlich verlängert. Als eine Möglichkeit ist das Dämpferbauteil aus Schaumstoff hergestellt. Da Schaumstoffe einen hohen Luftanteil aufweisen, ermöglicht ein derartiges Dämpferbauteil einen besonders hohen Schutz. Alternativ ist das Dämpferbauteil ein Gummiüberzug. Dadurch kann der Anfahrschutz einteilig und kostengünstig ausgeführt werden. Alternativ ist das Dämpferbauteil aus Holz hergestellt. Holz ist kostengünstig und leicht an die Montagesituation anpassbar, dabei sind die Stoßdämpfungseigenschaften von Holz hervorragend.

Im Vorstehenden wurde eine Sprinkleranlage 5 als die Feuerlöschanlage beschrieben. Jedoch kann anstelle oder zusätzlich zu der Sprinkleranlage jedes andere Feuerlöschsystem als Feuerlöschanlage an dem Lastregal vorgesehen sein und durch den erfindungsgemäßen Anfahrschutz geschützt werden. Beispiele für weitere Feuerlöschsysteme sind ein Impuls-Feuerlöschsystem, eine Sprühwasserlöschanlage, eine Wassernebellöschanlage (Hochdruck-Wassernebellöschanlage oder Niederdruck-Wassernebellöschanlage), eine Schaumlöschanlage oder eine Pulverlöschanlage. Da all diese Feuerlöschsysteme ein ähnliches Sprühbild vorweisen, ist die Verwendung des spitzwinkligen zweiten Schenkels vorteilhaft, um das Sprühbild nicht zu beeinträchtigen. Auch Gaslöschanlagen oder Anlagen, die kein klares Sprühbild erzeugen, können durch den erfindungsgemäßen Anfahrschutz bei minimiertem Platzbedarf geschützt werden. Darüber hinaus können andere Bauteile, die nicht zu einer Feuerlöschanlage gehören, gleichermaßen durch den Anfahrschutz geschützt werden. Beispiele für andere Bauteile sind Rohrleitungen, Verkabelungen sowie Kamera-, Sensor- und Überwachungssysteme. Ferner ist der erfindungsgemäße Anfahrschutz auch zur vertikalen Montage geeignet, um vertikal verlaufende Bauteile zu schützen.

Im Vorstehenden umfasst "angewinkelt" sowohl ein einteiliges Biegen wie bei dem ersten Ausführungsbeispiel als auch ein Anschweißen oder vergleichbares Anbringen mit einem bestimmten Winkel.

Die verschiedenen Ausführungsbeispiele und Modifikationen, die vorangehend beschrieben sind, können in ihren jeweiligen Charakteristika miteinander kombiniert werden, solange sich dadurch keine offensichtlichen Widersprüche ergeben.

Der erfindungsgemäße Anfahrschutz kommt insbesondere in gewerblich genutzten Lastregalen zum Einsatz, beispielsweise in Lager- oder Logistikhallen.

### Bezugszeichenliste

- 1; 1M: Anfahrschutz
- 2: Hauptkörper
- 20: Kontaktabschnitt
- 20A: vorbestimmte Fläche
- 20B: Kontaktfläche
- 20C: erste Längskante
- 20D: zweite Längskante
- 22: erster Schenkel
- 24: zweiter Schenkel
- 26: Durchgangsloch
- 3: Befestigungsabschnitt
- 3A: Innenfläche
- 3B: Außenfläche
- 3C: versetzte Kante
- 3D: oberste Kante
- 3E: unterste Kante
- 30: Loch
- 4: Lastregal
- 40: Rahmen
- 42: vertikaler Träger
- 44: horizontaler Träger
- 46: Boden
- 5: Sprinkleranlage
- α: erster Winkel
- β: zweiter Winkel

## Patentansprüche

1. Anfahrschutz (1; 1M) für ein Lastregal (4), mit:
einem länglichen Hauptkörper (2), und
je einem Befestigungsabschnitt (3) an beiden Enden des Hauptkörpers (2) in seiner Längsrichtung, wobei der Befestigungsabschnitt (3) angepasst ist, an einen Rahmen (40) des Lastregals (4) so befestigt zu werden, dass eine Innenfläche (3A) des Befestigungsabschnitts (3) den Rahmen (40) berührt; wobei
der Hauptkörper (2) einen dünnwandigen Querschnitt mit
einem Kontaktabschnitt (20), der eine vorbestimmte Fläche (20A), die parallel zu der Innenfläche (3A) des Befestigungsabschnitts (3) ausgerichtet ist, und eine als Kontaktfläche (20B) definierte Fläche hat, die der vorbestimmten Fläche (20A) entgegengesetzt ist, **dadurch gekennzeichnet, dass** der Kontaktabschnitt (20) eine erste Längskante (20C) und eine zweite Längskante (20D) aufweist, die zwischen den Befestigungsabschnitten (3) verlaufen,
einem ersten Schenkel (22), der an der ersten Längskante (20C) des Kontaktabschnitts (20) angewinkelt ist, und
einem zweiten Schenkel (24) aufweist, der an der zweiten Längskante (20D) des Kontaktabschnitts (20) angewinkelt ist;
ein erster Winkel (α) zwischen dem Kontaktabschnitt (20) und dem ersten Schenkel (22) 90° beträgt, und
ein zweiter Winkel (β) zwischen dem Kontaktabschnitt (20) und dem zweiten Schenkel (24) weniger als 90° beträgt.

2. Anfahrschutz (1; 1M) nach Anspruch 1, ferner mit mindestens einem Durchgangsloch (26) in der Nähe der zweiten Längskante (20D).

3. Anfahrschutz (1; 1M) nach Anspruch 1 oder 2, wobei der Befestigungsabschnitt (3) ein Loch (30) zur Befestigung an das Lastregal (4) aufweist.

4. Anfahrschutz (1; 1M) nach Anspruch 3, wobei das Loch (30) ein Langloch ist.

5. Anfahrschutz (1; 1M) nach einem der Ansprüche 1 bis 4, wobei der Befestigungsabschnitt (3) ein Montagebauteil aufweist, das konfiguriert ist, zusammen mit dem Lastregal (4) eine lösbare formschlüssige Verbindung zu bilden.

6. Anfahrschutz (1; 1M) nach einem der Ansprüche 1 bis 5, wobei der erste Schenkel (22) und/oder der zweite Schenkel (24) nicht auf der gesamten Länge der dazugehörigen Längskante (20C, 20D) des Kontaktabschnitts (20) vorgesehen ist/sind.

7. Anfahrschutz (1; 1M) nach einem der Ansprüche 1 bis 6, wobei der Befestigungsabschnitt (3) eine versetzte Kante (3C) aufweist, die parallel zu der nächstliegenden Längskante (20C, 20D) des Kontaktabschnitts (20) verläuft und zu dieser versetzt ist.

8. Anfahrschutz nach einem der Ansprüche 1 bis 7, wobei der Befestigungsabschnitt (3) eine bündige Kante aufweist, die bündig mit der nächstliegenden Längskante (20C, 20D) des Kontaktabschnitts (20) verläuft und diese fortsetzt.

9. Anfahrschutz (1; 1M) nach einem der Ansprüche 1 bis 8, wobei der Anfahrschutz (1; 1M) durch Zuschneiden und Biegen eines Blechs hergestellt ist, wobei das Blech ein Stahlblech ist.

10. Anfahrschutz (1; 1M) nach einem der Ansprüche 1 bis 9, ferner mit einem Dämpferbauteil, das auf der Kontaktfläche (20B) des Kontaktabschnitts (20) vorgesehen ist, wobei das Dämpferbauteil aus Schaumstoff hergestellt ist oder ein Gummiüberzug ist oder aus Holz hergestellt ist.

11. Anfahrschutz (1; 1M) nach einem der Ansprüche 1 bis 10, wobei die Länge des Kontaktabschnitts (20) zwischen 1000mm und 4000mm liegt.

12. Anfahrschutz (1; 1M) nach Anspruch 11, wobei die Länge des Kontaktabschnitts (20) zwischen 1700mm und 2100mm, insbesondere bei 1900mm, liegt.

13. Anfahrschutz (1; 1M) nach Anspruch 11, wobei die Länge des Kontaktabschnitts (20) zwischen 2400mm und 3000mm, insbesondere bei 2700mm, liegt.

14. Anfahrschutz (1; 1M) nach Anspruch 11, wobei die Länge des Kontaktabschnitts (20) zwischen 3200mm und 4000mm, insbesondere bei 3600mm, liegt.

15. Lastregal (4) mit:
einem Anfahrschutz (1; 1M) nach einem der Ansprüche 1 bis 14, und
einer Sprinkleranlage (5) und/oder einem Feuerlöschsystem,
wobei das Lastregal (4) ein Palettenregal oder ein Kragarmregal oder ein Flachbodenregal oder ein Weitspannregal ist.

## Claims

1. Collision protection (1; 1M) for a load rack (4), comprising:
an elongated main body (2), and
a fastening portion (3) at each end of the main body (2) in the longitudinal direction thereof, the fastening portion (3) being adapted to be fastened to a frame (40) of the load rack (4) such that an inner surface (3A) of the fastening portion (3) contacts the frame (40); wherein
the main body (2) has a thin-walled cross-section including
a contact portion (20) having a predetermined surface (20A) aligned parallel to the inner surface (3A) of the fastening portion (3) and a surface defined as a contact surface (20B) opposite to the predetermined surface (20A), **characterized in that** the contact portion (20) has a first longitudinal edge (20C) and a second longitudinal edge (20D) which extend between the fastening portions (3),
a first leg (22) angled at the first longitudinal edge (20C) of the contact portion (20), and
a second leg (24) angled at the second longitudinal edge (20D) of the contact portion (20);
a first angle (α) between the contact portion (20) and the first leg (22) is 90°, and
a second angle (β) between the contact portion (20) and the second leg (24) is less than 90°.

2. Collision protection (1; 1M) according to claim 1, further comprising at least one through hole (26) in the vicinity of the second longitudinal edge (20D).

3. Collision protection (1; 1M) according to claim 1 or 2, wherein the fastening portion (3) has a hole (30) for being fastened to the load rack (4).

4. Collision protection (1; 1M) according to claim 3, wherein the hole (30) is a long hole.

5. Collision protection (1; 1M) according to any one of claims 1 to 4, wherein the fastening portion (3) has a mounting component that is configured to form a releasable form-fitting connection together with the load rack (4).

6. Collision protection (1; 1M) according to any of claims 1 to 5, wherein the first leg (22) and/or the second leg (24) are/is not provided over the entire length of the associated longitudinal edge (20C, 20D) of the contact portion (20).

7. Collision protection (1; 1M) according to any one of claims 1 to 6, wherein the fastening portion (3) has an offset edge (3C) which runs parallel to the nearest longitudinal edge (20C, 20D) of the contact portion (20) and is offset relative thereto.

8. Collision protection according to any one of claims 1 to 7, wherein the fastening portion (3) has a flush edge that runs flush with the nearest longitudinal edge (20C, 20D) of the contact portion (20) and extends said edge.

9. Collision protection (1; 1M) according to any one of claims 1 to 8, wherein the collision protection (1; 1M) is produced by cutting and bending a sheet metal, wherein the sheet metal is a steel sheet.

10. Collision protection (1; 1M) according to any one of claims 1 to 9, further comprising a damper component provided on the contact surface (20B) of the contact portion (20), wherein the damper component is made of foam material or is a rubber coating or is made of wood.

11. Collision protection (1; 1M) according to any of claims 1 to 10, wherein the length of the contact portion (20) is between 1000 mm and 4000 mm.

12. Collision protection (1; 1M) according to claim 11, wherein the length of the contact portion (20) is between 1700 mm and 2100 mm, in particular 1900 mm.

13. Collision protection (1; 1M) according to claim 11, wherein the length of the contact portion (20) is between 2400 mm and 3000 mm, in particular 2700 mm.

14. Collision protection (1; 1M) according to claim 11, wherein the length of the contact portion (20) is between 3200 mm and 4000 mm, in particular 3600 mm.

15. Load rack (4) comprising:
a collision protection (1; 1M) according to any one of claims 1 to 14, and
a sprinkler system (5) and/or a fire extinguishing system,
wherein the load rack (4) is a pallet rack or a cantilever rack or a flat-bottom rack or a wide-span rack.

## Revendications

1. Protection anti-collision (1 ; 1M) pour un rayonnage de charge (4), comprenant :
un corps principal allongé (2), et
une partie de fixation (3) à chacune des deux extrémités du corps principal (2) dans le sens longitudinal, la partie de fixation (3) étant adaptée pour être fixée à un cadre (40) du rayonnage de charge (4) de telle sorte qu'une surface intérieure (3A) de la partie de fixation (3) touche le cadre (40) ;
le corps principal (2) comportant une section transversale à paroi mince ayant
une partie de contact (20) ayant une surface prédéterminée (20A) alignée parallèlement à la surface intérieure (3A) de la partie de fixation (3) et une surface définie comme surface de contact (20B) opposée à la surface prédéterminée (20A), **caractérisé en ce que** la partie de contact (20) présente un premier bord longitudinal (20C) et un deuxième bord longitudinal (20D) s'étendant entre les parties de fixation (3),
une première branche (22) coudée au niveau du premier bord longitudinal (20C) de la partie de contact (20), et
une deuxième branche (24) coudée au niveau du deuxième bord longitudinal (20D) de la partie de contact (20) ;
un premier angle (α) entre la partie de contact (20) et la première branche (22) est de 90°, et
un deuxième angle (β) entre la partie de contact (20) et la deuxième branche (24) est inférieur à 90°.

2. Protection anti-collision (1 ; 1M) selon la revendication 1, comprenant en outre au moins un trou traversant (26) près du deuxième bord longitudinal (20D).

3. Protection anti-collision (1 ; 1M) selon la revendication 1 ou 2, la partie de fixation (3) ayant un trou (30) pour la fixation au rayonnage de charge (4).

4. Protection anti-collision (1 ; 1M) selon la revendication 3, le trou (30) étant un trou oblong.

5. Protection anti-collision (1 ; 1M) selon l'une des revendications 1 à 4, la partie de fixation (3) ayant un élément de montage configuré pour former avec le rayonnage de charge (4) une liaison détachable par complément de forme.

6. Protection anti-collision (1 ; 1M) selon l'une des revendications 1 à 5, la première branche (22) et/ou la deuxième branche (24) n'étant pas prévues/prévue sur toute la longueur du bord longitudinal correspondant (20C, 20D) de la partie de contact (20).

7. Protection anti-collision (1 ; 1M) selon l'une des revendications 1 à 6, la partie de fixation (3) ayant un bord décalé (3C) qui est parallèle au bord longitudinal le plus proche (20C, 20D) de la partie de contact (20) et est décalé par rapport à celui-ci.

8. Protection anti-collision selon l'une des revendications 1 à 7, la partie de fixation (3) ayant un bord affleurant qui est aligné avec le bord longitudinal le plus proche (20C, 20D) de la partie de contact (20) et qui prolonge celui-ci.

9. Protection anti-collision (1 ; 1M) selon l'une des revendications 1 à 8, la protection anti-collision (1 ; 1M) étant fabriquée par découpe et pliage d'une tôle, la tôle étant une tôle d'acier.

10. Protection anti-collision (1 ; 1M) selon l'une des revendications 1 à 9, comprenant en outre un élément amortisseur prévu sur la surface de contact (20B) de la partie de contact (20), l'élément amortisseur étant fabriqué en mousse, ou étant un revêtement en caoutchouc ou étant fabriqué en bois.

11. Protection anti-collision (1 ; 1M) selon l'une des revendications 1 à 10, la longueur de la partie de contact (20) étant comprise entre 1000 mm et 4000 mm.

12. Protection anti-collision (1 ; 1M) selon la revendication 11, la longueur de la partie de contact (20) étant comprise entre 1700 mm et 2100 mm, surtout à 1900 mm.

13. Protection anti-collision (1 ; 1M) selon la revendication 11, la longueur de la partie de contact (20) étant comprise entre 2400 mm et 3000 mm, surtout à 2700 mm.

14. Protection anti-collision (1 ; 1M) selon la revendication 11, la longueur de la partie de contact (20) étant comprise entre 3200 mm et 4000 mm, surtout à 3600 mm.

15. Rayonnage de charge (4) comprenant :
une protection anti-collision (1 ; 1M) selon l'une des revendications 1 à 14, et
un système d'arrosage (5) et/ou un système d'extinction d'incendie,
le rayonnage de charge (4) étant un rayonnage à palettes ou un rayonnage à bras portants ou un rayonnage à fond plat ou un rayonnage à grande portée.
